(19)

**Europäisches Patentamt**
**European Patent Office**
**Office européen des brevets**

(11) **EP 4 489 285 A1**

(12) **EUROPEAN PATENT APPLICATION**

(43) Date of publication:
    **08.01.2025 Bulletin 2025/02**

(21) Application number: **23183646.1**

(22) Date of filing: **05.07.2023**

(51) International Patent Classification (IPC):
    **H02M 3/335** (2006.01)        **H02M 3/00** (2006.01)

(52) Cooperative Patent Classification (CPC):
    **H02M 3/01; H02M 1/0054; H02M 3/33571**

(84) Designated Contracting States:
    **AL AT BE BG CH CY CZ DE DK EE ES FI FR GB
    GR HR HU IE IS IT LI LT LU LV MC ME MK MT NL
    NO PL PT RO RS SE SI SK SM TR**
    Designated Extension States:
    **BA**
    Designated Validation States:
    **KH MA MD TN**

(71) Applicant: **ABB E-mobility B.V.**
    **2629 JG Delft (NL)**

(72) Inventors:
    • **DROFENIK, Uwe**
      **8053 Zurich (CH)**
    • **CANALES, Francisco**
      **5405 Baden-Dättwil (CH)**
    • **HUBER, Jonas**
      **5000 Aarau (CH)**
    • **KOLAR, Johann Walter**
      **8044 Zurich (CH)**

(74) Representative: **Zimmermann & Partner**
    **Patentanwälte mbB**
    **Postfach 330 920**
    **80069 München (DE)**

(54) **CONVERTER AND METHOD OF TRANSFERRING POWER FROM A MEDIUM VOLTAGE SIDE TO A LOW VOLTAGE SIDE IN A CONVERTER**

(57)      A converter including at least one DC/AC stage configured for generating a medium frequency AC power and having first and second AC outputs for the medium frequency AC power, at least one AC/DC stage configured for generating a DC power from the medium frequency AC power and having first and second AC inputs for the medium frequency AC power, and a resonant circuit provided between the DC/AC stage and the AC/DC stage and configured for transferring the medium frequency AC power. The resonant circuit includes at least two capacitors including a first capacitor and a second capacitor. The first capacitor is connected between the first AC output and the first AC input, and the second capacitor is connected between the second AC output and the second AC input. The resonant circuit further includes at least two inductors including a first inductor and a second inductor connected in series and defining a connection point between the two inductors. In a first alternative, the first inductor is connected in series between the first capacitor and the first AC input, and the second inductor is connected in series between the first AC input and the second AC input. In a second alternative, the first inductor is connected in series between the first capacitor and the first AC output, and the second inductor is connected in series between the first AC output and the second AC output. The at least two capacitors provide galvanic insulation between the DC/AC stage and the AC/DC stage.

Fig. 1

**EP 4 489 285 A1**

## Description

Aspects of the invention relate to a converter, particularly a DC/DC converter having a medium voltage side and a low voltage side galvanically insulated from the medium voltage side. Aspects of the invention particularly relate to a solid-state converter suitable for providing a grid-insulated DC power in the megawatt range. Aspects of the invention particularly relate to a transformer-less converter.

Technical background:

Converters are often utilized for converting electric power for applications such as renewables (photovoltaic, wind), energy storage (battery, hydrogen, fuel cells), electric machines such as large drives, electric vehicle charging, and datacenters. A converter is often provided between the power consumer or producer, and a medium voltage power grid.

A general requirement for such converters is to provide an essentially constant output voltage, essentially constant output power, and to draw and/or provide approximately sinusoidal currents to/from the medium voltage grid, which are in phase with the grid phase voltages to achieve power-factor correction functionality.

Known converters, particularly solid-state converters and/or solid-state transformers, may utilize a design in which a high-frequency AC power is generated and transferred between a medium voltage stage and a low-voltage stage by a transformer, particularly a medium frequency transformer, which provides galvanic insulation between the medium voltage grid and the low-voltage side.

In some application, the use of a medium frequency transformer may be undesirable due to factors such as initial cost, operating cost, space requirement, system complexity, and/or conversion efficiency.

Thus, there is a need for an improved solution to provide galvanic insulation in a converter. The present invention solves the problem at least in part.

Summary of the invention

In view of the above, the invention as set out in the appended set of claims is provided. According to an aspect, a converter is described. The converter includes at least one DC/AC stage configured for generating a medium frequency AC power and having first and second AC outputs for the medium frequency AC power, at least one AC/DC stage configured for generating a DC power from the medium frequency AC power and having first and second AC inputs for the medium frequency AC power, and a resonant circuit provided between the DC/AC stage and the AC/DC stage and configured for transferring the medium frequency AC power. The resonant circuit includes at least two capacitors including a first capacitor and a second capacitor. The first capacitor is connected between the first AC output and the first AC input, and the second capacitor is connected between the second AC output and the second AC input. The resonant circuit further includes at least two inductors including a first inductor and a second inductor connected in series and defining a connection point between the two inductors. In a first alternative, the first inductor is connected in series between the first capacitor and the first AC input, and the second inductor is connected in series between the first AC input and the second AC input. In a second alternative, the first inductor is connected in series between the first capacitor and the first AC output, and the second inductor is connected in series between the first AC output and the second AC output. The at least two capacitors provide galvanic insulation between the DC/AC stage and the AC/DC stage.

According to an aspect, a method of transferring power from a medium voltage side to a low voltage side in a converter is described. The method includes generating a medium frequency AC power at the medium voltage side, providing the medium frequency AC power to an AC/DC stage at the low voltage side through a resonant circuit, and providing galvanic insulation between AC outputs of the medium voltage side and AC inputs of the low voltage side by at least two capacitors. The resonant circuit includes the at least two capacitors including a first capacitor and a second capacitor. The first capacitor is connected between the first AC output and the first AC input, and the second capacitor is connected between the second AC output and the second AC input. The resonant circuit includes at least two inductors including a first inductor and a second inductor connected in series and defining a connection point between the two inductors. In a first alternative, the first inductor is connected in series between the first capacitor and the first AC input, and the second inductor is connected in series between the first AC input and the second AC input. In a second alternative, the first inductor is connected in series between the first capacitor and the first AC output, and the second inductor is connected in series between the first AC output and the second AC output.

According to an aspect, a converter is described. The converter may be configured for converting a first DC voltage into a second DC voltage. The first DC voltage and the second DC voltage may have the same potential. Beneficially, the first DC voltage may have a different potential than the second DC voltage. For example, the converter may operate as a transformer and/or a step-down converter. Likewise, the converter may operate as a step-up converter.

The converter may be configured for converting a medium voltage DC power into a low voltage DC power. Accordingly, the converter may be a DC/DC converter. In some embodiments, the converter may include a rectifier stage to generate the medium voltage DC power from a medium voltage AC power, such as a medium voltage AC power received from a medium voltage grid. Accordingly, the converter may be an AC/DC converter. In some embodiments, the converter may be configured for stepping down the medium voltage DC power. Accordingly, the converter may be a solid-state transformer.

According to an aspect, the converter may be devoid of a transformer, such as a medium frequency transformer, a transformer having windings provided on a magnetic core, and/or an induction-based transformer.

The low voltage DC power may be particularly useful for low voltage DC applications, such as, but not limited to, powering devices, electric vehicle charging, electrolytic processes such as hydrogen generation, and/or any of the uses described in the background section of this disclosure. The converter may be configured for providing a low voltage DC power having at least 500 Kilowatt (kW), at least 1 MW, at least 2 MW, at least 3 MW, at least 5 MW, or even at least 10 MW.

According to an aspect, a low voltage is described. A low voltage may be a voltage above 200 Volt (V), such as a voltage between 200 V - 1 kV, or even 200 V - 1.5 kV, or even 200 V - 2 kV. According to an aspect, a medium voltage is described. A medium voltage may be voltage higher than the low voltage, such as a voltage of above 1 kV, or even of above 1.5 kV, or even above 2 kV, such as a voltage between 1 kV - 52 kV, 1.5 kV - 52 kV, or 2 kV - 52 kV, particularly between 1 kV - 30 kV, 1.5 kV - 30 kV, or 2 kV - 30 kV, such as about 15 kV. For example, a medium voltage may be a voltage received, and optionally rectified, from a medium voltage grid, such as a 10 kV grid, a 15 kV grid, a 20 kV grid, a 25 kV grid, a 30 kV grid, or even a 50 kV grid. The medium voltage grid may be e.g. a 50 Hz grid or a 60 Hz grid.

According to an aspect, the converter includes a solid state transformer. According to an aspect, the converter may be a solid state transformer. According to an aspect, the converter may include a plurality of solid state transformers. The converter being configured for or operated as a solid state transformer does not necessarily infer that the converter includes an induction-based transformer.

According to an aspect, the converter includes a medium voltage side. The medium voltage side includes a DC/AC stage. According to an aspect, the medium voltage side includes an inverter circuit. The inverter circuit may include an inverter, such as an inverter configured for switching a medium voltage DC power to provide a medium frequency AC power. The inverter circuit may include a plurality of semiconductor components, such as a plurality of semiconductor switches. According to an aspect, the medium voltage side may be defined as a portion of the converter that is not galvanically insulated from, and/or (directly) electrically connected to a medium voltage grid. According to an aspect, the medium voltage side may be floating, e.g. not be connected to a ground potential.

According to an aspect, the converter includes a low voltage side. The low voltage side includes an AC/DC stage. According to an aspect, the low voltage side includes a rectifier, particularly for rectifying a medium frequency AC power generated by the medium voltage DC/AC stage to obtain a low voltage DC power. According to an aspect, the low voltage side may be defined as a portion of the converter that is galvanically insulated from the medium voltage side. The low voltage side may be grounded, e.g. include grounded components and/or have a defined ground and/or earth potential. The low voltage side may be connectable to grounded components, e.g. to transfer a low voltage DC power to and/or from the grounded components.

According to an aspect, the converter may be configured for receiving a power, e.g. from a medium voltage grid, and converting the power into a low voltage DC power to be used by an electric consumer. Likewise, the converter may be configured for receiving a low voltage DC power, and converting the low voltage DC power into a medium voltage DC power, or even a medium voltage AC power, e.g. to be fed into a medium voltage grid. According to an aspect, the converter may be configured for bi-directional operation. In some applications, e.g. when a bi-directional converter is operated to receive power from a local power source and to feed the power into a power grid, the side of the converter connected to the power grid may be considered the low voltage side, and the side of the converter connected to the local power source may be considered the medium voltage side.

According to an aspect, the converter, particularly the DC/AC stage, and/or the AC/DC stage, may include a plurality of semiconductor devices. In some embodiments described herein, the semiconductor devices may be described as transistors and/or diodes, particularly semiconductor diodes such as silicon diodes. Different types of semiconductor devices, such as switchable semiconductor devices may be provided. For example, the DC/AC stage, and/or even the AC/DC stage, may include actively switchable semiconductor devices, such as transistors and/or thyristors, such as a metal-oxide-semiconductor field-effect transistor (MOSFET), an insulated-gate bipolar transistor (IGBT), high-electron-mobility transistor (HEMT), or an integrated gate-commutated thyristor (IGCT).

It should be noted that, while the converter may be described herein as being suitable for converting a medium voltage DC power into a low voltage DC power, the potential of the low voltage DC power being lower than the potential of the medium voltage DC power, the converter may likewise generate a low voltage DC power having essentially the same potential as the medium voltage DC power, or even a low voltage DC power having a higher potential than the medium voltage DC power.

According to an aspect, the converter may include a plurality of (sub-)converters. For example, the converter may include (sub-)converters arranged in a Single-Input-Single-Output (SISO), Single-Input-Multiple-Output (SIMO), Multiple-Input-Multiple-Output (MIMO) and/or Input-Series-Output-Parallel (ISOP) topology. Likewise, a plurality of converters and/or converter modules may be provided in a SISO, SIMO, MIMO and/or ISOP topology, e.g. to provide a single low voltage DC power from multiple medium voltage DC powers, or to provide multiple low voltage DC powers from a single medium voltage DC power. In some embodiments, the multiple medium voltage DC powers may be generated by rectifying one or more phases of a multi-phase, such as a three-phase, medium voltage AC power. Some configurations, such as the ISOP configuration, may allow generating a low voltage DC (output) power having a lower potential than the medium voltage DC (input) power, particularly without including or utilizing induction-based voltage level transformation and/or transformers.

According to an aspect, the converter includes a resonant circuit provided between outputs of the DC/AC stage and inputs of the AC/DC stage. The resonant circuit may be configured for transferring a medium frequency AC power generated by the DC/AC stage to the AC/DC stage, and/or electrically coupling the DC/AC stage to the AC/DC stage. In particular, the resonant circuit may be configured for capacitively coupling outputs of the DC/AC stage to the AC/DC stage.

According to an aspect, the resonant circuit includes at least two capacitors. The capacitors may be provided as single capacitors, or capacitor assemblies including serially and/or parallel connected capacitors, such as capacitor banks, functionally resembling a single capacitor. For example, a capacitor bank may include a plurality of series connected capacitors, a plurality of parallel connected capacitors, and/or a plurality of series-parallel-connected capacitors.

A first capacitor is connected between a first AC output of the DC/AC stage and a first AC input of the AC/DC stage, and a second capacitor is connected between a second AC output of the DC/AC stage and a second input of the AC/DC stage. In particular, a first node of the first capacitor may be connected to an AC output, and a second node of the first capacitor may be indirectly connected to an AC input, particularly by being connected in series to a first inductor, the first inductor being connected to the AC input. In particular, a first node of the second capacitor may be connected to an AC output, and a second node of the second capacitor may be directly connected to an AC input. The capacitor may be connected in series between the AC output and the AC input.

According to an aspect, the AC output is galvanically insulated from the AC input by the capacitor. Accordingly, the DC/AC stage and the AC/DC stage are galvanically insulated by the at least two capacitors. Accordingly, the medium voltage side of the converter may be galvanically insulated from the low voltage side of the converter by the at least two capacitors.

According to an aspect, the resonant circuit includes two inductors including a first inductor and a second inductor connected in series, particularly connected in series to one another. The two inductors define a connection point between the inductors. The connection point may be connected to an AC input.

According to an aspect, the first inductor may be connected in series between the first capacitor and the first AC input, and the second inductor may be connected in series between the first AC input and the second AC input. Accordingly, both inductors may be provided on the low voltage side of the converter, or may be provided on the medium voltage side of the converter. The first inductor and the second inductor may be connected in series to the low voltage side nodes of the first capacitor and the second capacitor. A first node of the second inductor, particularly a node defining the connection point, may be connected to a first AC input, and a second node, particularly a node other than the connection point, may be connected to the second capacitor and a second AC input.

According to an aspect, the first inductor is connected to the first capacitor at an AC/DC side of the capacitor, the at least two inductors are connected, at the connection point, to an input of the AC/DC stage, and the second inductor is connected to the second capacitor at an AC/DC side of the capacitor.

According to an aspect, the first inductor is connected to the first capacitor at a DC/AC side of the capacitor, the at least two inductors are connected, at the connection point, to an output of the DC/AC stage, and the second inductor is connected to the second capacitor at a DC/AC side of the capacitor.

According to an aspect, the first inductor may be connected in series between the first capacitor and the first AC output, and the second inductor may be connected in series between the first AC output and the second AC output. Accordingly, both inductors may be provided on the medium voltage side of the converter. The first inductor and the second inductor may be connected in series to the medium voltage side nodes of the first capacitor and the second capacitor. A first node of the second inductor, particularly a node defining the connection point, may be connected to a first AC output, and a second node, particularly a node other than the connection point, may be connected to the second capacitor and a second AC output.

According to an aspect, the at least two inductors may each be connected, at a point other than the connection point, to the at least two capacitors and providing an inductance between the at least two capacitors.

According to an aspect, the capacitors and the inductors form a resonant circuit, i.e. a circuit having a resonant frequency, such as an LC-circuit. Accordingly, the converter, particularly the DC/AC stage, may be configured to operate at the resonant frequency. In particular, the DC/AC stage may generate a signal having a frequency f, such as an essentially rectangular voltage signal, however, other signal types, such as sinusoidal or quasi-sinusoidal signals may be contemplated. The DC/AC stage may be configured to provide the medium frequency AC power at the resonant frequency of the resonant circuit. Beneficially, by providing a rectangular signal, the design and/or control of the DC/AC stage may be simple.

According to an aspect, the resonant frequency of the resonant circuit may be essentially defined by the first inductor and the first and second capacitor. According to an aspect, the capacitance C of the first capacitor and the second capacitor may be identical, i.e. has the same value. In particular, the first inductance $L_1$ of the first inductor may be smaller than the second inductance $L_2$ of the second inductor. For example, the ratio $L_1$:$L_2$ may be 1:10 or more, 1:20 or more, 1:50 or more, or even 1:100 or more. Accordingly, particularly since the second inductance $L_2$ is larger than the first inductance $L_1$, the resonant frequency of the resonant circuit may be defined, calculated and/or approximated by the following equation (1):

$$(1) \quad L_1 = \frac{1}{(2\pi f)^2 \cdot \frac{C}{2}}$$

$L_1$ being the inductance of the first inductor
f being the resonant frequency; and
C being the capacitance of the first capacitor and the second capacitor

According to an aspect, the second inductor, particularly the second inductance $L_2$, is configured for shaping a current at zero crossings of the current. In particular, the second inductor may operate as a filter within the resonant circuit. In particular, the second inductor may be configured to shape the current such that switching losses in the DC/AC converter are reduced. For example, the inductance $L_2$ may be chosen such that the current of the resonant circuit is low or even near-zero when switching e.g. from a positive half-wave to a negative half-wave. In some embodiments, the inductance $L_2$ may compensate a potential phase-shift of the resonant circuit with respect to the medium frequency AC voltage. Beneficially, the current shaping of the inductance $L_2$ may improve the power efficiency of the converter, and may beneficially improve power density of the converter due to the converter being operable at higher load and/or frequency.

Further advantages, features, aspects and details that can be combined with embodiments described herein are evident from the dependent claims, the description and the drawings.

Brief description of the Figures:

The details will be described in the following with reference to the figures, wherein

Fig. 1    is a schematic view of a converter according to an embodiment;

Fig. 2    is a schematic view of a converter according to an embodiment;

Fig. 3    is a schematic view of a modular converter according to an embodiment;

Fig. 4    is an exemplary circuit diagram of a converter according to an embodiment; and

Fig. 5    is a flowchart of a method of transferring power between a medium voltage side and a low voltage side in a converter according to an embodiment.

Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

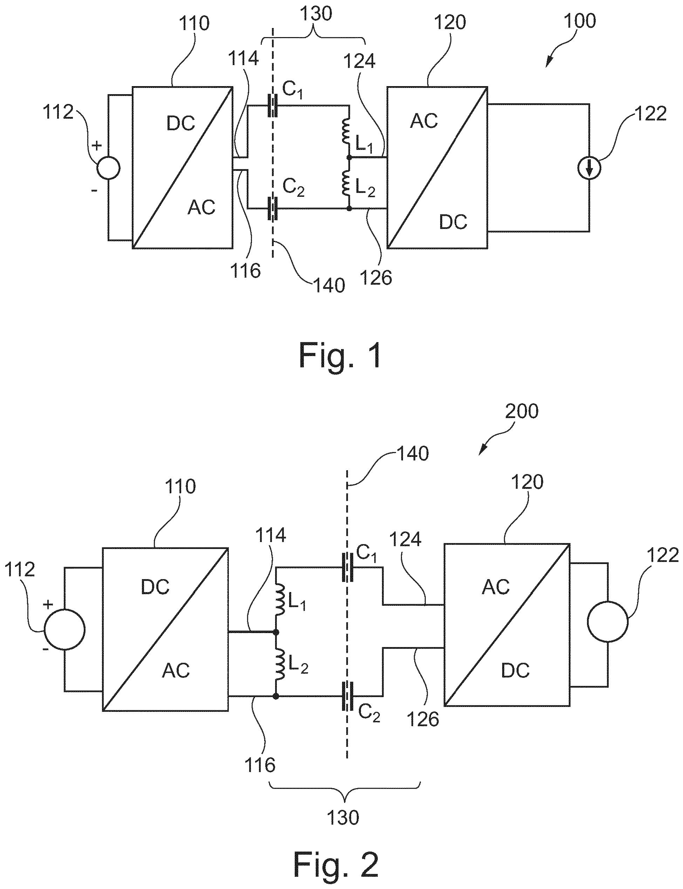

Fig. 1 shows a converter 100 according to an embodiment. A DC/AC stage 110 is configured for generating a medium frequency AC power from a DC power provided by a DC power source 112. The DC/AC stage has a first output 114 and a second output 116. A first node of a first capacitor $C_1$ is connected to the first output 114, and a first node of a second capacitor $C_2$ is connected to the second output 116.

As shown in Fig. 1, the capacitors $C_1$ and $C_2$ provide galvanic insulation 140. In particular, a medium voltage side including the DC power source 112 and the DC/AC stage 110 is galvanically insulated from a low voltage side, the low voltage side including e.g. the AC/DC stage 120 and a load 122.

The capacitors $C_1$ and $C_2$ form a part of a resonant circuit 130. The resonant circuit 130 further includes the inductors $L_1$ and $L_2$. A first node of the first inductor $L_1$ is connected to a second node of the first capacitor $C_1$. A second node of the second inductor $L_2$ is connected to a second node of the second capacitor $C_2$. A second node of the first inductor $L_1$ is connected to a first node of the second inductor $L_2$, defining a connection point. The connection point is connected to a first input 124 of the AC/DC stage 120. The second node of the

second inductor $L_2$, and the second node of the second capacitor $C_2$ are connected to a second input 126 of the AC/DC stage.

According to embodiments, the DC/AC stage 110 may generate a medium frequency AC power, and provide the medium frequency AC power at the outputs 114, 116. The frequency of the medium frequency AC power may be a resonant frequency of the resonant circuit 130, particularly as defined by the capacitance of the capacitors $C_1$, $C_2$, and the inductance of the first inductor $L_1$.

The medium frequency AC power may have a medium frequency. A medium frequency, according to embodiments described herein, may be understood as a frequency at or above 400 Hertz (Hz), at or above 600 Hz, at or above 800 Hz, at or above 1 kHz, at or above 2 kHz, at or above 5 kHz, at or above 10 kHz, at or above 20 kHz, at or above 50 kHz, or even at or above 100 kHz. For example, the medium frequency AC power may have a frequency of about 20 kHz.

It should be noted that, according to embodiments, the frequency of the medium frequency AC power may be tuned according to the calculated and/or measured resonance frequency of the resonant circuit 130. Likewise, the values of the components of the resonant circuit, particularly the values of the capacitors $C_1$, $C_2$, and the value of the inductor $L_1$, may be chosen, e.g. during design and/or construction of the converter, to define the resonant frequency of the resonant circuit 130.

In a non-limiting example, one or more components of the resonant circuit 130 may be prefabricated components. In particular, the capacitors $C_1$, $C_2$ may be prefabricated components, having a pre-defined capacitance, power- and/or frequency rating. Additionally, or alternatively, the capacitors $C_1$, $C_2$ may be fabricated from pre-fabricated components, such as by fabricating a capacitor bank including prefabricated capacitor elements. Accordingly, the resonant circuit 130 may be adapted according to parameters and/or limits of the capacitors $C_1$, $C_2$. For example, the target frequency of the converter may be chosen based on a given capacitance of the capacitors and a target power output. Accordingly, a value for the inductor $L_1$ may be calculated so that the resonant circuit 130 has a resonant frequency at the target frequency.

As shown in Fig. 1, the resonant circuit 130 includes a second inductor $L_2$, connected between the inputs 124, 126 of the AC/DC stage 120. The inductance of the second inductor $L_2$ is larger than the inductance of the first inductor. Accordingly, the effect of the second inductor on the resonant frequency of the resonant circuit 130 may be essentially neglected.

According to embodiments, the inductor $L_2$ may be configured for current shaping, particularly such that switching losses in the DC/AC stage are minimized. For example, the inductance of the inductor $L_2$ may be chosen such that, when the resonant circuit 130 is operated at the resonant frequency, switching between e.g. a positive half-wave and a negative half-wave occurs at or near a zero current point, and/or even a zero voltage point.

In an exemplary embodiment, the medium frequency AC power may be provided at a frequency of about 20 kHz. The capacitors $C_1$, $C_2$ may each have a capacitance of about 5 $\mu$F - 15 $\mu$F, such as about 14 $\mu$F. The first inductor $L_1$ may have an inductance of about 5 $\mu$H - 15 $\mu$H, such as about 9 $\mu$H. The second inductor $L_2$ may have an inductance of about 1 mH. Further potential configurations, e.g. for alternative frequencies f, may be derived according to equation (1) described herein.

It was observed that for a converter 100 operating at a higher rated medium frequency AC voltage, and/or a higher rated low voltage DC power voltage at the output of the AC/DC stage, the power transferrable by the resonant circuit may be substantially increased, with only a marginal increase in capacitor cost of the capacitors $C_1$ and $C_2$. Beneficially, the converter 100 may be operated at an output voltage of the DC power of 750 V or more, 1 kV or more, 2 kV or more, or even 4 kV or more.

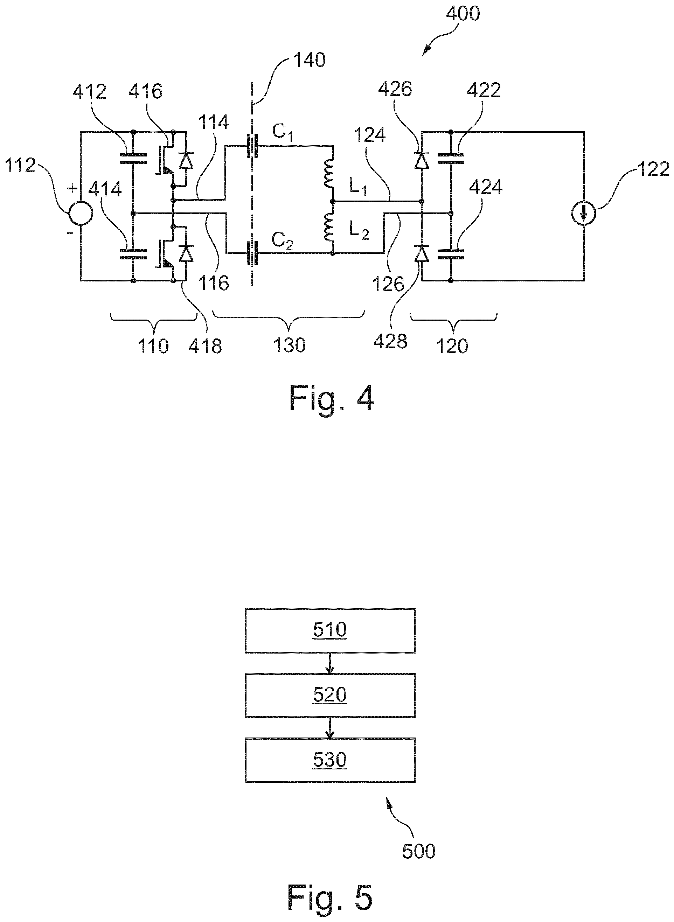

According to embodiments, the DC/AC stage 110 is a DC/AC stage known in the art. For example, the DC/AC stage 110 may be an inverter. For example, the DC/AC stage 110 may be a full-bridge and/or H-bridge inverter. For example, the DC/AC stage 110 may be a half-bridge inverter, e.g. as shown in Fig. 4.

According to embodiments, the AC/DC stage 120 is an AC/DC stage known in the art. For example, the AC/DC stage 120 may be a rectifier. For example, the AC/DC stage may be a full-bridge rectifier. For example, the AC/DC stage may be a half-bridge rectifier. For example, the AC/DC stage may be bridge voltage doubler, such as a Delon circuit, e.g. as shown in Fig. 4.

According to embodiments, the converter may be a bi-directional converter. Accordingly, the AC/DC stage may receive power on the side of the AC/DC stage 120, and operate the AC/DC stage 120 as a DC/AC stage, e.g. as described with respect to the DC/AC stage 110. Likewise, the AC/DC stage may operate as an AC/DC stage, e.g. as described with respect to the AC/DC stage 120.

As shown in Fig. 1, the converter 100 according to embodiments is devoid of a transformer. Accordingly, the resonant circuit 130 is generally not configured for stepping up and/or stepping down the medium frequency AC voltage between the outputs 114, 116 and the inputs 124, 126.

Referring now to Fig.2, a converter 200 according to an alternative embodiment is described. According to some aspects, and not limited thereto, the converter 200 shown in Fig. 2 may be the converter 100 shown in Fig. 1 being operated in a reverse direction, e.g. as a second operation mode of a bi-directional converter.

The converter 200 shown in Fig. 2 differs from the converter 100 shown in Fig. 1 in that the inductors $L_1$ and $L_2$ are provided on the medium voltage side of the converter. Accordingly, a first node of the first inductor $L_1$

is connected to a first node of the first capacitor $C_1$. A second node of the second inductor $L_2$ is connected to a first node of the second capacitor $C_2$. A second node of the first inductor $L_1$ is connected to a first node of the second inductor $L_2$, defining a connection point. The connection point is connected to a first output 114 of the DC/AC stage 110. The second node of the second inductor $L_2$, and the first node of the second capacitor $C_2$ are connected to a second output 116 of the DC/AC stage 110.

A second node of a first capacitor $C_1$ is connected to the first input 124, and a second node of a second capacitor $C_2$ is connected to the second input 126.

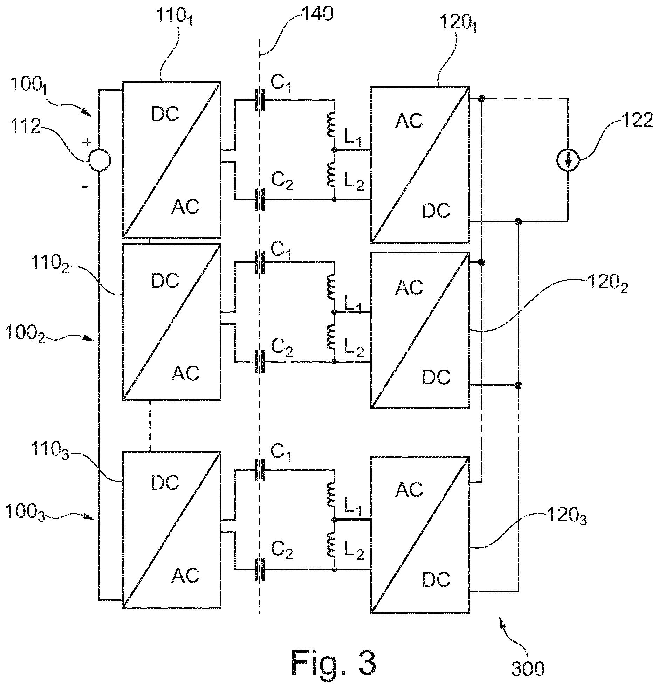

Referring now to Fig. 3, a converter 300 according to an embodiment is described. The converter 300 includes a plurality of converters $100_1$, $100_2$, $100_3$, which may be converters 100 e.g. as described with reference to Fig. 1 and Fig. 2. The DC/AC stages $110_1$, $110_2$, $110_3$ of the plurality of converters $100_1$, $100_2$, $100_3$ are connected in series to the DC power source 112. Accordingly, the DC/AC stages $110_1$, $110_2$, $110_3$ essentially operate as a voltage divider. According to embodiments, the converter 300 may include utilize a plurality of converters 200.

A resonant circuit and an DC/AC stage $110_1$, $110_2$, $110_3$ is provided for each of the plurality of AC/DC stages $120_1$, $120_2$, $120_3$.

As shown in Fig. 3, the outputs of the AC/DC stages $120_1$, $120_2$, $120_3$ are connected in parallel to the load 122. Accordingly, the converter 300 is configured for providing a DC output power having a potential that is lower than the potential of the input power. In particular, the converter 300 may be a SIPO converter.

According to embodiments, the converter 300 may be configured for providing a low voltage DC output power having a voltage of at least 500 V, at least 750 V, at least 1 kV, or even at least 2 kV. The converter 300 may be configured for providing the low voltage DC output power having a power of at least 500 kW, at least 1 MW, at least 2 MW, or even at least 3 MW. It should be noted that the output power may be a sum of the powers provided by the plurality of converters 100 in the converter 300.

In a first example, the converter 300 may be configured for generating a DC output power at 750 V at a rated output power of 3 MW. The medium frequency AC power at the outputs of the DC/AC stage may have a voltage of about 21 kV, e.g. by being generated from rectifying a medium voltage AC power received from a 15 kV medium voltage grid. The converter 300 may include 31 converters 100 connected in a SIPO configuration as shown in Fig. 3. Each capacitor $C_1$, $C_2$ may have a capacitance of 6.5 $\mu$F. The resonant circuits 130 may be rated for operating at a medium frequency AC power having a frequency of 20 kHz. Each converter 100 may be rated for providing about 97 kW. Each converter 100 may be configured for operating at a current of about 258 A. Each capacitor $C_1$, $C_2$ may be provided by connecting 13 capacitor elements in parallel to form a capacitor bank, the number of required capacitor elements being essentially defined by the current rating of the converter. Each inductor $L_1$ may have an inductance of about 9.75 $\mu$H, and be rated for a maximum current of about 365 A.

In a second example, the converter 300 may be configured for generating a DC output power at 1000 V at a rated output power of 3 MW. The medium frequency AC power at the outputs of the DC/AC stage may have a voltage of about 21 kV, e.g. by being generated from rectifying a medium voltage AC power received from a 15 kV medium voltage grid. The converter 300 may include 23 converters 100 connected in a SIPO configuration as shown in Fig. 3. Each capacitor $C_1$, $C_2$ may have a capacitance of 6.5 $\mu$F. The resonant circuits 130 may be rated for operating at a medium frequency AC power having a frequency of 20 kHz. Each converter 100 may be rated for providing about 130 kW. Each converter 100 may be configured for operating at a current of about 261 A. Each capacitor $C_1$, $C_2$ may be provided by connecting 13 capacitor elements in parallel to form a capacitor bank, the number of required capacitor elements being essentially defined by the current rating of the converter. Each inductor $L_1$ may have an inductance of about 9.75 $\mu$H, and be rated for a maximum current of about 369 A.

In a third example, the converter 300 may be configured for generating a DC output power at 2000 V at a rated output power of 3 MW. The medium frequency AC power at the outputs of the DC/AC stage may have a voltage of about 21 kV, e.g. by being generated from rectifying a medium voltage AC power received from a 15 kV medium voltage grid. The converter 300 may include 11 converters 100 connected in a SIPO configuration as shown in Fig. 3. Each capacitor $C_1$, $C_2$ may have a capacitance of 7 $\mu$F. The resonant circuits 130 may be rated for operating at a medium frequency AC power having a frequency of 20 kHz. Each converter 100 may be rated for providing about 273 kW. Each converter 100 may be configured for operating at a current of about 273 A. Each capacitor $C_1$, $C_2$ may be provided by connecting 14 capacitor elements in parallel to form a capacitor bank, the number of required capacitor elements being essentially defined by the current rating of the converter. Each inductor $L_1$ may have an inductance of about 9 $\mu$H, and be rated for a maximum current of about 385 A.

In a fourth example, the converter 300 may be configured for generating a DC output power at 4000 V at a rated output power of 3 MW. The medium frequency AC power at the outputs of the DC/AC stage may have a voltage of about 21 kV, e.g. by being generated from rectifying a medium voltage AC power received from a 15 kV medium voltage grid. The converter 300 may include 5 converters 100 connected in a SIPO configuration as shown in Fig. 3. Each capacitor $C_1$, $C_2$ may have a capacitance of 7.5 $\mu$F. The resonant circuits 130 may be rated for operating at a medium frequency AC power having a frequency of 20 kHz. Each converter 100 may be rated for providing about 600 kW. Each converter 100 may be configured for operating at a current of about 300

A. Each capacitor $C_1$, $C_2$ may be provided by connecting 15 capacitor elements in parallel to form a capacitor bank, the number of required capacitor elements being essentially defined by the current rating of the converter. Each inductor $L_1$ may have an inductance of about 8.5 $\mu$H, and be rated for a maximum current of about 424 A.

As shown in Fig. 1, Fig. 2 and Fig. 3, each capacitor $C_1$, $C_2$ provides galvanic insulation 140 between the medium voltage side and the low voltage side of the converter 100, 300. According to embodiments, particularly when the converter 100 is connected to a power grid, the capacitors $C_1$, $C_2$ may be configured for providing lightning impulse insulation. Accordingly, each capacitor $C_1$, $C_2$ may be rated for a surge voltage of above 50 kV, above 75 kV, such as above 80 kV, or even above 100 kV.

According to embodiments, since the voltage rating of the capacitors $C_1$, $C_2$ may be defined by the required lightning impulse insulation, and as is evident from the examples given above, the converter 300 may be particularly efficient when operating at a higher rated DC power output voltage.

Referring now to Fig. 4, a simplified circuit diagram of a converter 400 according to embodiments is described. The converter 400 may be an implementation of the converter 100 described herein.

According to embodiments, the converter 400 may be adapted to reflect the topology of the converter 200 shown in Fig. 2, particularly by providing the inductors at the medium voltage side of the converter 400, without deriving form the scope of this disclosure.

As shown in Fig. 4, the DC/AC stage 110 is implemented as a half-bridge inverter and/or a half H-bridge inverter, including two capacitors 412, 414 connected to the DC power source 112 and defining a second neutral point at the second output 116. Accordingly, the second capacitor $C_2$ is connected to the second neutral point.

The DC/AC stage 110 further includes two electronic switches 416, 418, such as transistors or thyristors, configured for generating a medium frequency AC power at the first output 114 and/or between the first output 114 and the second output 116. In some embodiment, the two electronic switches 416, 418 may be implemented as a plurality of series connected electronic switches.

The converter 400, particularly the DC/AC stage 110, may include a controller and/or driving circuit (not shown) for controlling the electronic switches 416, 416, e.g. by providing timed control signals to the inputs and/or gates of the electronic switches 416, 418, e.g. according to methods known in the art. In particular, the controller may be configured for causing the DC/AC stage 110 to generate a medium frequency AC power having a medium frequency, such as a 20 kHz.

As shown in Fig. 4, the AC/DC stage 120 is implemented as a half-bridge rectifier, particularly as a full-wave voltage doubler and/or Delon circuit. The rectifier includes two capacitors 422, 424 connected to outputs of the AC/DC stage and/or the load 122 and defining a first neutral point. The first neutral point is connected to the second input 126 of the AC/DC stage. Accordingly, the second capacitor $C_2$ and the second inductor $L_2$ is connected to the second neutral point.

The AC/DC stage 120 further includes two diodes 426, 428, such as silicon diodes, configured for rectifying the medium frequency AC power received at the inputs 124, 126 of the AC/DC stage.

In some embodiments, the medium frequency AC power may have a voltage of half the voltage of the power provided by the DC power source. In some embodiments, the AC/DC stage may act as a voltage doubler. Accordingly, the voltage of the low voltage DC output power may be essentially the same as the voltage of the power provided by the DC power source. Beneficially, by implementing the converter 400 as shown in Fig. 4, the components of the resonant circuit 130 may be configured for a lower rated voltage, such as half the voltage of the power provided by the DC power source.

In some embodiments, the capacity of one or more of the capacitors 412, 414, 422, 424 may be between 10 $\mu$F to 1000 $\mu$F, such as between 50 $\mu$F and 500 $\mu$F, such as about 100 $\mu$F.

In the embodiment shown in Fig. 4, the first neutral point is a neutral point of the AC/DC stage, and the second neutral point is a neutral point of the DC/AC stage. Likewise, according to embodiments, e.g. if the converter 400 is provided in a configuration as shown in Fig. 2, the first neutral point may be a neutral point of the DC/AC converter, and the second neutral point may be a neutral point of the AC/DC stage.

While the converter 400 has been described as having an inverter circuit in the DC/AC stage 110 and a diode-based rectifier circuit in the AC/DC stage 120, according to embodiments, the converter 400 may be configured as a bi-directional converter. A bi-directional converter may allow transferring a power in either direction. In particular, the bi-directional converter may be configured for receiving a power from the DC power source 112 and feeding a power into the load 122, and likewise be operable to receive a power from the load 122 and feeding a power into the DC power source 112. According to embodiments, the bi-directional converter may include an AC/DC stage 120 similar to the DC/AC stage 110. In particular, additionally or alternatively to the diodes 426, 428, electronic switches such as the electronic switches 416, 418 may be provided in parallel to, or in place of, the diodes 426, 428. In the bi-directional converter, the AC/DC stage may be an inverter circuit. Accordingly, in the bi-directional converter, the AC/DC stage 120 may be operable as either a rectifier or an inverter. Likewise, the DC/AC stage 110 may be operable either as a rectifier or an inverter. Accordingly, the AC/DC stage 120 may include a controller and/or driving circuit (not shown) for controlling the electronic switches of the AC/DC stage. The controller may be the controller as described for the DC/AC stage 110, or a separate controller.

While the converter 400 has been described as having half-bridge configuration for the DC/AC stage 110 and the AC/DC stage 120, further and/or alternative configurations or combinations thereof may be equally suitable. For example, the converter 400 may include a half-bridge configuration at the DC/AC stage 110, and a full-bridge rectifier at the AC/DC stage 120. Likewise, the converter 400 may include a full-bridge configuration at the DC/AC stage 110, and a half-bridge at the AC/DC stage 120. Likewise, the converter 400 may include a full-bridge configuration at both the DC/AC stage 110 and the AC/DC stage.

Referring now to Fig. 5, according to embodiments, a method 500 of transferring power between a medium voltage side and a low voltage side in a converter is described. The method 500 may include the use of a converter 100, 200, 300, 400 according to embodiments described herein. The method 500 may include operating a converter 100, 200, 300, 400 according to embodiments described herein according to the method 500.

The method 500 includes generating 510 a medium frequency AC power at the medium voltage side. The medium frequency AC power may be a medium frequency AC power as described herein with reference to aspects and/or embodiments. In particular, the medium frequency AC power may be generated by a DC/AC stage 110 as described herein with reference to embodiments.

The method further includes providing 520 the medium frequency AC power to an AC/DC stage at the low voltage side through a resonant circuit. The AC/DC stage may be an AC/DC stage 120 as described herein with reference to embodiments. The resonant circuit may be a resonant circuit 130 as described herein with reference to embodiments.

The method includes providing 530 galvanic insulation between AC outputs of the medium voltage side and AC inputs of the low voltage side by at least two capacitors, such as the capacitors $C_1$, $C_2$ of the resonant circuit 130.

It should be noted that the operations 510, 520, and 530 may be executed in any order, and may be executed in parallel and/or in part. In particular, galvanic insulation may be provided 530 independently of the operations 510, 520. This may beneficially provide lightning impulse insulation between the medium voltage side and the low voltage side of the converter, even if the converter is in an unpowered state.

According to embodiments, generating 510 the medium frequency AC power, and/or providing 520 the medium frequency AC power may include generating the medium frequency AC power at a resonant frequency of the resonant circuit.

According to embodiments, the method 500 may include tuning the value of the first inductor to define the resonant frequency of the resonant circuit. Tuning, in the context of this disclosure, may be understood as choosing a value of the first inductor during design, configuration and/or construction, to define a resonant frequency of the resonant circuit according to a predefined target resonant frequency. In particular, during design of the circuit, the target resonant frequency, and/or the capacity of the capacitors of the resonant circuit may be set e.g. due to design constraints, and the inductance of the first inductor may be variable.

According to embodiments, the method 500 may include tuning the value of the second inductor to minimize switching losses by minimizing a current, particularly a current flowing through an electronic switch of the DC/AC stage, at the zero crossings of the current. A zero crossing of the current may be defined as the DC/AC switching the medium frequency AC power between positive and negative half-waves. Tuning, in the context of this disclosure, may be understood as choosing a value of the second inductor during design, configuration and/or construction. The value of the second inductor may be chosen so that a phase shift of the resonant circuit with respect to the medium frequency AC power at the outputs of the DC/AC stage are minimized. The value of the second inductor may be chosen so that the second inductor acts as a filter. The value of the second inductor may be chosen so that the second inductor acts as a decoupling inductance. The value of the second inductor may be chosen such that the second inductor acts as an energy storage inductor.

According to embodiments, tuning the value of the first inductor and/or the second inductor may include design operations known in the art, such as a simulation of the resonant circuit and/or waveform analysis, phase shift correction calculations, or the like.

Next, general aspects of the invention are described. Therein, the reference numbers of the Figures are used merely for illustration. The aspects are, however, not limited to any particular embodiment. Instead, any aspect described herein can be combined with any other aspect(s) or embodiments described herein unless specified otherwise.

According to embodiments, the first capacitor $C_1$ and the second capacitor $C_2$ of a converter 100, 200, 300, 400 may be provided as components in a converter installation, the converter installation physically separating the medium voltage side of the converter from the low voltage side of the converter, e.g. by minimum safety distance.

According to embodiments, the capacitors $C_1$, $C_2$ may each include one or more bushings. The bushings may be configured for receiving a connector, such as a cable shoe, from the medium voltage side of the converter, such as the outputs 114, 116 of the DC/AC stage 110. The bushings may be configured for providing medium voltage insulation. The bushings may be configured for providing a minimum safe distance between the connector and the low voltage side of the converter. The bushing may be integrated into the capacitor. For example, in embodiments utilizing a capacitor bank for the

capacitor $C_1$, $C_2$, the bushing may be integrated into a housing of the capacitor bank.

According to embodiments, the inductors $L_1$, $L_2$ are uncoupled inductors. In particular, the inductors may not be required to be provided e.g. as windings on the same magnetic core. For example, the inductors may be provided as separate coils, e.g. at different places within the converter 100, 200, 300, 400, such as at different positions on a printed circuit board.

According to embodiments, the inductors $L_1$, $L_2$ may coupled inductors. For example, the inductors may be provided as windings on the same magnetic core. The inductance of each inductor $L_1$, $L_2$ may be defined by the number of turns of each of the windings. For example, the inductors may be provided as an autotransformer. A tap on the autotransformer may define the connection point of the inductors $L_1$, $L_2$.

While the foregoing is directed to some embodiments, other and further embodiments may be devised without departing from the basic scope, and the scope is determined by the claims that follow.

**Claims**

1. A converter, comprising:

   at least one DC/AC stage configured for generating a medium frequency AC power and having first and second AC outputs for the medium frequency AC power;
   at least one AC/DC stage configured for generating a DC power from the medium frequency AC power and having first and second AC inputs for the medium frequency AC power;
   a resonant circuit provided between the DC/AC stage and the AC/DC stage and configured for transferring the medium frequency AC power, the resonant circuit comprising:

      - at least two capacitors comprising a first capacitor and a second capacitor, the first capacitor being connected between the first AC output and the first AC input, and the second capacitor being connected between the second AC output and the second AC input;
      - at least two inductors comprising a first inductor and a second inductor connected in series and defining a connection point between the two inductors; wherein

   a.) the first inductor is connected in series between the first capacitor and the first AC input; and the second inductor is connected in series between the first AC input and the second AC input; or
   b.) the first inductor is connected in series between the first capacitor and the first AC output; and the second inductor is connected in series between the first AC output and the second AC output; and wherein
   the at least two capacitors provide galvanic insulation between the DC/AC stage and the AC/DC stage.

2. The converter according to claim 1, wherein

   the first inductor has a first inductance, and the second inductor has a second inductance higher than the first inductance, wherein a resonant frequency of the resonant circuit is defined by the first inductance.

3. The converter according to claim 2, wherein the DC/AC stage is configured to provide the medium frequency AC power at the resonant frequency of the resonant circuit.

4. The converter according to claim 2 or 3, wherein the second inductance is configured for shaping a current at zero crossings of the current.

5. The converter according to any one of the preceding claims, wherein

   the second inductor is connected to a first neutral point, and
   the second capacitor is connected to a second neutral point.

6. The converter according to claim 5, wherein

   the first neutral point is a neutral point of the AC/DC converter and the second neutral point is a neutral point of the DC/AC stage, or wherein the first neutral point is a neutral point of the DC/AC converter and the second neutral point is a neutral point of the AC/DC stage.

7. The converter according to any one of the preceding claims, wherein:

   the at least one DC/AC stage is a plurality of DC/AC stages connected to a medium voltage DC power in series; wherein
   a resonant circuit and an AC/DC stage is provided for each of the plurality of DC/AC stages, and wherein
   the at least one AC/DC stage is a plurality of AC/DC stages connected to a low voltage DC output in parallel.

8. The converter according to any one of the preceding claims, wherein
   the at least two inductors are uncoupled inductors.

9. The converter according to any one of the claims 1 to 7, wherein
the at least two inductors are coupled inductors, particularly wherein
the first inductor and the second inductor are comprised within an autotransformer.

10. The converter according to any one of the preceding claims, wherein
the converter is configured for providing a low voltage DC output power having a voltage of at least 500 Volt and/or having a power of at least 1 Megawatt.

11. The converter according to any one of the preceding claims, wherein
the at least two capacitors comprise bushings configured for providing medium voltage insulation.

12. The converter according to any one of the preceding claims, wherein

the DC/AC stage comprises an inverter circuit, and wherein
the AC/DC stage comprises an inverter circuit, and wherein
the AC/DC stage preferably is operable as either a rectifier or an inverter.

13. Method of transferring power between a medium voltage side and a low voltage side in a converter, comprising:

generating a medium frequency AC power at the medium voltage side;
providing the medium frequency AC power to an AC/DC stage at the low voltage side through a resonant circuit;
providing galvanic insulation between AC outputs of the medium voltage side and AC inputs of the low voltage side by at least two capacitors;
the resonant circuit comprising:

- the at least two capacitors comprising a first capacitor and a second capacitor, the first capacitor being connected between the first AC output and the first AC input, and the second capacitor being connected between the second AC output and the second AC input;
- at least two inductors comprising a first inductor and a second inductor connected in series and defining a connection point between the two inductors; wherein

a.) the first inductor is connected in series between the first capacitor and the first AC input; and the second inductor is connected in series between the first AC input and the second AC input; or
b.) the first inductor is connected in series between the first capacitor and the first AC output; and the second inductor is connected in series between the first AC output and the second AC output.

14. The method according to claim 13, further comprising at least one selected from the group consisting of:

- generating the medium frequency AC power at a resonant frequency of the resonant circuit;
- tuning the value of the first inductor to define the resonant frequency of the resonant circuit; and
- tuning the value of the second inductor to minimize switching losses by minimizing a current at the zero crossing.

15. Use of the converter according to any one of claims 1 to 12 to perform the method according to claim 13 or 14.

Fig. 1

Fig. 2

Fig. 3

400

412  416

412  416  114

140

426  422

112

414

C₁

124

122

110  418

130

428  120

## Fig. 4

510

520

530

500

## Fig. 5

Europäisches
Patentamt

European
Patent Office

Office européen
des brevets

# EUROPEAN SEARCH REPORT

Application Number

EP 23 18 3646

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/286061 A1 (HAYASHI YUSUKE [JP] ET AL) 8 September 2022 (2022-09-08) | 1-4,7-15 | INV.<br>H02M3/335 |
| Y | * paragraph [0037] – paragraph [0040]; figure 1 *<br>* paragraphs [0038], [0058], [0059]; figure 8 *<br>* paragraph [0077]; figure 13A *<br>----- | 5,6 | H02M3/00 |
| Y | US 2011/267863 A1 (RIGBERS KLAUS [DE] ET AL) 3 November 2011 (2011-11-03)<br>* paragraph [0056]; figure 1 *<br>----- | 5,6 | |

TECHNICAL FIELDS
SEARCHED (IPC)

H02M

The present search report has been drawn up for all claims

| Place of search | Date of completion of the search | Examiner |
|---|---|---|
| Munich | 23 November 2023 | Schürle, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 23 18 3646

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2023

| Patent document cited in search report | Publication date | Patent family member(s) | | Publication date |
|---|---|---|---|---|
| US 2022286061 A1 | 08-09-2022 | JP | 2022133822 A | 14-09-2022 |
| | | US | 2022286061 A1 | 08-09-2022 |
| US 2011267863 A1 | 03-11-2011 | AT | E545190 T1 | 15-02-2012 |
| | | EP | 2144358 A1 | 13-01-2010 |
| | | KR | 20100006545 A | 19-01-2010 |
| | | US | 2010008105 A1 | 14-01-2010 |
| | | US | 2011267863 A1 | 03-11-2011 |

EPO FORM P0459

For more details about this annex : see Official Journal of the European Patent Office, No. 12/82